# EUROPEAN PATENT SPECIFICATION

(11) **EP 0 767 115 B1**
(45) Date of publication and mention of the grant of the patent: **23.05.2001**
(21) Application number: 96202715.7
(22) Date of filing: 28.09.1996
(51) Int. Cl.: B65G 19/14, B65G 23/44

(54) **Transporting device for a cable conveyor for free-flowing loose materials**
Antrieb eines Seilförderers für freifliessende, lose Materialien
Entraînement d'un transporteur à câble pour matières en vrac s'écoulant librement

(30) Priority: 03.10.1995 IT MI950671 U
(43) Date of publication of application: 09.04.1997
(73) Proprietor: Pirovano, Paolo, 22052 Cernusco Lombardone, Como (IT)
(72) Inventor: Pirovano, Paolo, 22052 Cernusco Lombardone, Como (IT)
(74) Representative: Faraggiana, Vittorio, Dr. Ing.

(56) References cited:
- WO-A-83/01245
- US-A- 3 788 454
- US-A- 3 905 473
- US-A- 4 071 136

## Description

This invention refers to a conveyor for free-flowing loose materials, for example granular or powdery material, of the type consisting of a cable along which are disposed radial disks for transporting the material (see WO-A-8 301 245).

In such conveyors, the cable follows a closed loop-shaped path comprising a tubular duct extending between a material feeding device and devices for dispensing the material in correspondence with the users. The movement of the cable is provided by an assembly comprising a driving pulley, snub pulleys and tension pulleys.

One of the problems encountered in these systems concerns the movement of the cable by the driving pulley. In fact, the transmission of the motion occurs by contact between the pulley and the disks located in the section of cable wound around it; in particular, in the devices most commonly used, the disks are received in the V-shaped race of the pulley, thereby achieving the contact substantially on two portions of their outer edge. It is obvious that such a limited contact surface can easily cause the cable to slip with respect to the pulley, resulting in irregular functioning and wear and tear of the materials.

In addition, the high force per unit of surface transmitted by the pulley to the disks tends to cause the latter to side skid with respect to the radial plane of the pulley in which they lie, resulting in stress on the cable and on the disk in the area in which it embraces the cable.

In order to reduce the force transmitted to each individual disk, it has been suggested to fit rubber elements in the race, which push out of shape upon insertion of the disks so as to increase the contact surface. The use of such deformable elements, however, has proved to be unsatisfactory due to the fact that they wear out very rapidly.

To prevent the cable from slipping it has also been suggested to use pulleys provided with teeth along their circumference, the disks having to fit into the recesses between two consecutive teeth. This coupling ensures the transmission of the force necessary to operate the conveyor without slipping occurring. Nevertheless, it presents drawbacks due to the fact that the tolerances for inserting the disks between the teeth must be quite limited and even the slightest slipping of a disk along the cable (for example due to wear of the materials or to imperfect fastening) is sufficient to cause interference between the disk and the teeth.

The general scope of this invention is to obviate the aforementioned problems by providing a device for driving a cable provided with disks, which ensures transmission of the motion of the driving pulley to the cable without the latter slipping and without the cable or the disks being subject to harmful stress.

This scope is achieved, according to the invention, by providing a transporting device for a conveyor for free-flowing loose materials, the device comprising a cable forming a closed loop along which are secured radial disks for transporting the material, a plurality of pulleys for actuation, tensioning and/or transmission of the cable, characterized by the fact that to actuate the cable a pair of driving pulleys having the same diameter are coaxially disposed to be operated in synchronous rotation, said driving pulleys receiving, in races along their circumference, disks belonging respectively to a first and a second section of the cable, an additional pulley being provided to receive, along its circumference, disks belonging to a section of the cable between the sections wound round the first and second pulley of the pair.

The innovative principles of this invention and its advantages with respect to the known technique will be more clearly evident from the following description of a possible exemplificative embodiment applying such principles, with reference to the accompanying drawings, in which:

Fig. 1 shows a schematic perspective view of a transporting device made according to the innovative principles of this invention.

Fig. 2 shows a top view of a detail of the transporting device of Fig. 1.

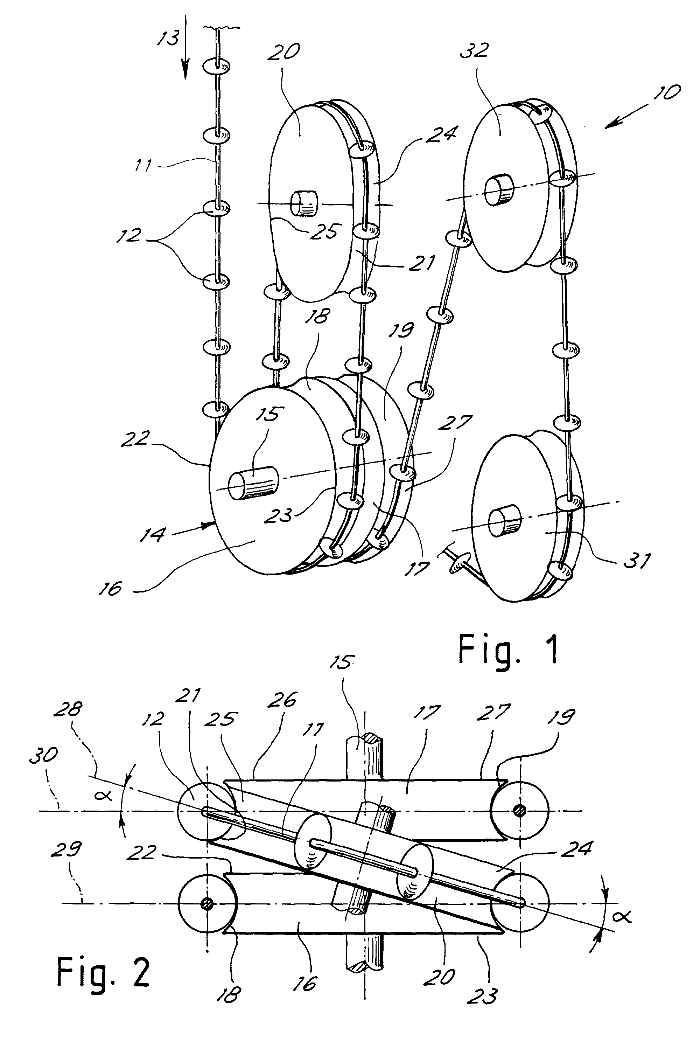

With reference to the figures, Fig. 1 schematically shows an assembly 10 for operating a cable 11 provided with a plurality of radial transporting disks 12 and circulating, in the direction of the arrow 13, along a closed loop for conveying free-flowing loose materials. Conveyor systems of this kind are well-known to the expert in the field and consequently will not be further described herein.

The assembly 10 comprises a rotating motorized cable driving unit 14. The unit 14 is keyed onto a driving shaft 15 protruding from a motor not shown in the figure.

According to the innovative principles of the invention, the motorized unit 14 is composed of a pair of driving pulleys 16, 17 around the outer edge of which the cable 11 is wound. The first and second pulley 16, 17 have the same diameter and are disposed in such a way as to be actuated in synchronous rotation by the driving shaft 15.

The outer edges of the pulleys 16, 17 are provided respectively with races 18, 19 designed to receive the disks 12 on the cable.

Disposed close to the pair of pulleys 16, 17 is an additional idle pulley 20 also having a circumferential race 21 to receive the disks 12.

The three pulleys 16, 17, 20 are reciprocally disposed in such a way that the cable, with respect to its forward direction of movement, initially winds around the first driving pulley 16, as can be clearly seen in Fig. 1, defining on its circumference an incoming portion 22 and an outgoing portion 23 of the cable; from here the cable is sent back around the idle pulley 20, also defining circumferential incoming 24 and outgoing 25 portions on it; lastly, the cable winds around the second driving pulley 17, between respective incoming 26 and outgoing 27 portions.

Advantageously, to prevent excessive stress on the disks and the risk of them slipping out of the races, the three pulleys 16, 17, 20 are reciprocally disposed so that the transmission pulley 20 lies on a plane 28 forming an angle a ranging from 10° to 35°, preferably around 20°, with respect to the parallel planes 29, 30 of the driving pulleys 16, 17.

In particular, as can be seen in Fig. 2, the plane of pulley 20 is oriented so as to dispose the circumferential cable incoming portion 24 substantially in line with the circumferential outgoing portion 23 of the first driving pulley 16 and dispose its circumferential outgoing portion 25 substantially in line with the circumferential incoming portion 26 of the second driving pulley 17.

At this point it is clear how the cable transporting device according to the invention enables the driving force to be distributed along a longer section of the cable than in the known devices, thereby increasing the number of disks interacting with the driving unit. This decreases the specific force transmitted to the disks, thus overcoming the previously described drawbacks of the known technique.

In order to further improve the transporting action of the disks, the races of the pulleys can be V-shaped, with a sufficiently small angle as to enable the disks to substantially fit into the races. This angle advantageously ranges from 12° to 30°, preferably from 17° to 20°. In addition, the races can be provided with small projections to improve the adherence of the disks.

The foregoing description of an embodiment applying the innovative principles of this invention is obviously given by way of example in order to illustrate such innovative principles and should not therefore be understood as a limitation to the invention as defined in the claims. For example, as shown in Fig. 1, in addition to the driving unit 14 and the transmission pulley 20, the assembly 10 can comprise additional cable transmission and tensioning pulleys 31, 32. The reciprocal disposition of the pulleys, however, may differ from that shown herein.

In addition, the pulley 20 may also be a driving pulley, utilizing known means for synchronizing its rotation with respect to that of unit 14.

## Claims

1. Transporting device (10) for a conveyor for free-flowing loose materials, the device (10) comprising a cable (11) forming a closed loop along which are secured radial disks (12) for transporting the material, a plurality of pulleys for actuation, tensioning and/or transmission of the cable, characterized by the fact that to actuate the cable (11) a pair of driving pulleys (16, 17) having the same diameter are coaxially disposed to be operated in synchronous rotation, said driving pulleys receiving, in races (18, 19) along their circumference, disks (12) belonging respectively to a first and a second section of the cable, an additional pulley (20) being provided to receive, along its circumference (21), disks (12) belonging to a section of the cable between the sections wound round the first (16) and second (17) pulley of the pair.

2. Device as claimed in claim 1, characterized by the fact that the additional pulley (20) lies in a plane (28) forming an angle (α) with respect to the planes (29, 30) of the pair of pulleys (16, 17), the plane (28) of said pulley (20) being oriented so as to dispose its circumferential cable incoming portion (24) substantially in line with the circumferential cable outgoing portion (23) of the first driving pulley (16) and dispose its circumferential cable outgoing portion (25) substantially in line with the circumferential cable incoming portion (26) of the second driving pulley 17.

3. Device as claimed in claim 2, characterized by the fact that the angle (α) formed by the planes of the pulleys (16, 17, 20) ranges from 10° to 35°, preferably around 20°.

4. Device as claimed in claim 1, characterized by the fact that the additional pulley (20) is an idle pulley.

5. Device as claimed in claim 1, characterized by the fact of comprising additional cable transmission and tensioning pulleys (31, 32).

6. Device as claimed in claim 1, characterized by the fact that the races (18, 19, 21) of the pulleys are generically V-shaped with an angle ranging from 12° to 30°, preferably between 17° and 20°.

7. Device as claimed in claim 1, characterized by the fact that the races (18, 19) are provided with small projections protruding from the surfaces designed to come into contact with the disks.

## Patentansprüche

1. Transportvorrichtung (10) für eine Fördereinrichtung für frei fließende lose Materialien bzw. Schüttgüter, mit einem Kabel (11), das eine geschlossene Schleife bildet, entlang welcher radiale Scheiben (12) zum Transportieren des Materials befestigt sind, einer Vielzahl von Riemenscheiben für den Antrieb, das Spannen und/oder Weiterleiten des Kabels, dadurch gekennzeichnet, daß zum Antreiben des Kabels (11) ein Paar Antriebsriemenscheiben (16, 17) mit demselben Durchmesser koaxial angeordnet sind, um mit synchroner Drehung angetrieben zu werden, wobei die Antriebsriemenscheiben in Rillen (18, 19) entlang ihres Umfangs die Scheiben (12) aufnehmen, die zu einem ersten bzw. einem zweiten Abschnitt des Kabels gehören, und wobei eine zusätzliche Riemenscheibe (20) vorgesehen ist, um entlang ihres Umfangs (21) die Scheiben (12) aufzunehmen, die zu einem Abschnitt des Kabels zwischen den Abschnitten gehören, die um die erste (16) und die zweite (17) Riemenscheibe des Paares gewickelt sind.

2. Vorrichtung nach Anspruch 1, dadurch gekennzeichnet, daß die zusätzliche Riemenscheibe (20) in einer Ebene (28) liegt, die einen Winkel (α) bezüglich der Ebenen (29, 30) des Paares der Riemenscheiben (16, 17) bildet, wobei die Ebene (28) der Riemenscheibe (20) derart ausgerichtet ist, daß sie ihren in Umfangsrichtung verlaufenden Kabel-Eintrittsabschnitt (24) im wesentlichen in einer Linie mit dem in Umfangsrichtung ausgerichteten Kabel-Austrittsabschnitt (23) der ersten Antriebsriemenscheibe (16) anordnet und ihren in Umfangsrichtung verlaufenden Kabel-Austrittsabschnitt (25) im wesentlichen in einer Linie mit dem in Umfangsrichtung verlaufenden Kabel-Eintrittsabschnitt (26) der zweiten Antriebsriemenscheibe (17) anordnet.

3. Vorrichtung nach Anspruch 2, dadurch gekennzeichnet, daß der durch die Ebenen der Riemenscheiben (16, 17, 20) gebildete Winkel (α) im Bereich von 10° bis 35°, vorzugsweise bei etwa 20° liegt.

4. Vorrichtung nach Anspruch 1, dadurch gekennzeichnet, daß die zusätzliche Riemenscheibe (20) eine Leerlauf-Riemenscheibe ist.

5. Vorrichtung nach Anspruch 1, dadurch gekennzeichnet, daß sie zusätzliche Kabel-Weiterleitungsriemenscheiben und Spannriemenscheiben (31, 32) aufweist.

6. Vorrichtung nach Anspruch 1, dadurch gekennzeichnet, daß die Rillen (18, 19, 21) der Riemenscheiben generell V-förmig sind mit einem Winkel im Bereich von 12° bis 30°, vorzugsweise zwischen 17° und 20°.

7. Vorrichtung nach Anspruch 1, dadurch gekennzeichnet, daß die Rillen (18, 19) mit kleinen Vorsprüngen ausgestattet sind, die derart ausgelegt sind, daß sie mit den Scheiben in Berührung kommen.

## Revendications

1. Dispositif d'entraînement (10) pour un convoyeur destiné à des matières en vrac à écoulement libre, le dispositif (10) comprenant un câble (11) formant une boucle fermée le long de laquelle sont fixés des disques radiaux (12) pour transporter la matière, une pluralité de poulies pour l'actionnement, la tension et/ou la transmission du câble, caractérisé par le fait que pour actionner le câble (11) , une paire de poulies de commande (16,17) ayant le même diamètre sont disposées coaxialement pour la mise en fonctionnement en rotation synchrone, lesdites poulies de commande recevant, dans des chemins de roulement ou pistes (18,19) le long de leur circonférence, des disques (12) appartenant respectivement à une première et à une seconde section du câble, une poulie supplémentaire (20) étant prévue pour recevoir, le long de sa circonférence (21), des disques (12) appartenant à une section du câble entre les sections enroulées autour de la première (16) et de la seconde (17) poulie de la paire.

2. Dispositif selon la revendication 1, caractérisé par le fait que la poulie supplémentaire (20) se situe dans un plan (28) formant un angle (α) par rapport aux plans (29,30) de la paire de poulies (16,17), le plan (28) de ladite poulie étant orienté de façon à disposer sa portion d'entrée de câble circonférentielle (24) sensiblement en alignement avec la portion de sortie de câble circonférentielle (23) de la première poulie de commande (16) et disposer sa portion de sortie de câble circonférentielle (25) sensiblement en alignement avec la portion d'entrée de câble circonférentielle (26) de la seconde poulie de commande 17.

3. Dispositif selon la revendication 2, caractérisé par le fait que l'angle (α) formé par les plans des poulies (16,17,20) varie de 10° à 35°, de préférence autour de 20°.

4. Dispositif selon la revendication 1, caractérisé par le fait que la poulie supplémentaire (20) est une poulie folle.

5. Dispositif selon la revendication 1, caractérisé par le fait de comprendre des poulies supplémentaires de tension et de transmission de câble (31,32).

6. Dispositif selon la revendication 1, caractérisé par le fait que les chemins de roulement (18,19,21) des poulies sont de façon générique en forme de V avec un angle allant de 12 ° à 30°, de préférence entre 17° et 20°.

7. Dispositif selon la revendication 1, caractérisé par le fait que les chemins de roulement (18,19) sont munis de petites protubérances faisant saillie à partir des surfaces et qui sont destinées à venir en contact avec les disques.
